# FASCICULE DE BREVET EUROPEEN

(11) **EP 3 233 593 B1**
(45) Date de publication et mention de la délivrance du brevet: **21.10.2020**
(21) Numéro de dépôt: 15802180.8
(22) Date de dépôt: 06.11.2015
(51) Int. Cl.: B60T 7/04, G05G 1/46, B60T 7/06

(54) **SYSTEME DE FREINAGE D'UN VEHICULE**
BREMSSYSTEM EINES FAHRZEUGS
BRAKING SYSTEM OF A VEHICLE

(30) Priorité: 18.12.2014 FR 1462752
(43) Date de publication de la demande: 25.10.2017
(73) Titulaire: Renault S.A.S., 92100 Boulogne-Billancourt (FR)
(72) Inventeur: DURAND, Stephane, F-28630 Berchères-les-Pierres (FR); DE BOISSIEU, Cedric, F-94500 Champigny sur Marne (FR)
(86) Numéro de dépôt international: PCT/FR2015/053003
(87) Numéro de publication internationale: WO 2016/097506

(56) Documents cités:
- EP-A2- 0 997 805
- EP-A2- 1 577 184
- WO-A1-2004/031881
- WO-A1-2013/186609
- US-A- 3 807 253
- US-A- 3 828 625
- US-A1- 2001 013 262
- US-A1- 2012 031 220
- US-A1- 2012 216 651
- US-A1- 2014 326 103
- US-B1- 6 230 581

## Description

L'invention se rapporte à un système de freinage d'un véhicule.

Un tel système comprend généralement une pédale de frein dotée d'un patin d'actionnement et montée en rotation sur une chape de pédalier. Une pression du pied sur ledit patin entraine une rotation de ladite pédale qui entre alors en interaction avec un maitre-cylindre pour assurer la fonction de freinage du véhicule.

Or, dans certaines configurations, pour des raisons de sécurité vis-à-vis d'un choc frontal du véhicule et pour des raisons d'architecture et de règlementation, la pédale de frein peut adopter un profil singulier, susceptible de remettre en question son aptitude à interagir efficacement avec le maitre-cylindre. En effet, ce type de pédale présente deux segments décalés, un premier segment portant le patin d'actionnement et un deuxième segment qui est monté en rotation sur ladite chape. De cette manière, une pression du pied exercée sur le patin ne va pas s'effectuer dans le prolongement du deuxième segment, entrainant alors des contraintes mécaniques importantes au niveau de la pédale. Il en résulte une mauvaise interaction entre la pédale de frein et le maitre cylindre, et donc des conditions de freinage aléatoires qui risquent de se dégrader dans le temps.

Des exemples de systèmes de ce type sont connues par les documents US 2012/031 220 A1, EP 1 577 184 A2, US 6 230 581 B1 ou EP 0 997 805 A2.

Un système de freinage selon l'invention permet d'assurer avec maitrise et fiabilité une fonction de freinage sur un véhicule, pour un profil singulier de pédale de frein.

L'invention a pour objet un système de freinage d'un véhicule comprenant une chape de pédalier, un maitre-cylindre et une pédale de frein dotée d'un patin d'actionnement, la pédale étant montée en rotation sur ladite chape pour lui permettre d'interagir avec ledit maitre-cylindre au moyen d'une pression exercée par le pied sur ledit patin pour assurer le freinage dudit véhicule.

La principale caractéristique d'un système de freinage selon l'invention, est que la pédale présente un premier segment portant le patin d'actionnement et un deuxième segment qui est décalé par rapport audit premier segment et qui monté en rotation sur ladite chape, le premier segment possédant un appendice saillant s'étendant parallèlement audit premier segment et apte à venir interagir avec le maitre-cylindre. De cette manière, l'appendice saillant constitue un organe de la pédale, qui est destiné à venir au contact du maitre-cylindre de façon à déclencher dans des conditions optimisées, le freinage du véhicule. En effet, puisque l'appendice saillant est dans le prolongement du premier segment, une pression du pied sur le patin d'actionnement va engendrer une poussée de dudit appendice sur le maitre-cylindre, qui est dans le même plan que celui dans lequel s'effectue la rotation dudit premier segment. Il en résulte donc une poussée stable et bien maitrisée de l'appendice saillant sur le maitre-cylindre pour assurer de façon sûre et fiable le freinage du véhicule. L'appendice saillant peut constituer avec le premier et le deuxième segment une pièce monobloc, ou bien constituer une pièce rapportée venant se solidariser audit premier segment. L'appendice saillant peut être ou non réalisé dans le même matériau que celui du premier segment. Le premier segment et l'appendice saillant créent un segment résultant, dont la longueur totale est supérieure à la longueur du premier segment. Préférentiellement, le premier segment est rectiligne et l'appendice saillant est rectiligne, le segment résultant étant rectiligne et s'étendant parallèlement audit premier segment.

Avantageusement, le premier segment et le deuxième segment sont dans le prolongement l'un de l'autre, l'appendice saillant s'étendant vers le deuxième segment. Autrement dit, pour cette configuration, le premier segment est prolongé du même côté, d'une part, par l'appendice saillant, et d'autre part, par le deuxième segment.

De façon préférentielle, le premier segment et le deuxième segment sont parallèles et sont reliés entre eux par un segment de liaison, qui est incliné par rapport audit premier segment et audit deuxième segment. Le terme « incliné » inclut la configuration pour laquelle le segment de liaison est perpendiculaire au premier et au deuxième segment.

Préférentiellement, l'appendice saillant est plan et de faible épaisseur. De cette manière, l'appendice est peu encombrant et ne contribue pas à augmenter significativement la masse du véhicule.

De façon avantageuse, l'appendice saillant est une pièce rapportée qui est solidarisée au premier segment. De cette manière, les pédales existantes peuvent être améliorées au niveau de leur fonctionnalité grâce à l'implantation de l'appendice saillant.

Avantageusement, l'appendice saillant est fixé au premier segment par l'intermédiaire d'au moins un rivet.

De façon préférentielle, l'appendice saillant est fixé au premier segment par l'intermédiaire de trois rivets. Ainsi, si un rivet devait accidentellement manquer, il resterait deux rivets pour assurer efficacement la fixation de l'appendice saillant sur le premier segment. En effet, la présence de deux rivets permet d'éviter à l'appendice saillant de pivoter par rapport au premier segment lors de son contact avec le maitre-cylindre.

Selon un autre mode de réalisation préféré d'un système de freinage selon l'invention, l'appendice saillant est fixé au premier segment par soudage.

Préférentiellement, l'appendice saillant est en métal.

L'invention a pour deuxième objet une pédale de frein pour la réalisation d'un système de freinage selon l'invention.

La principale caractéristique d'une pédale de frein selon l'invention, est qu'elle présente un premier segment portant le patin d'actionnement et un deuxième segment qui est décalé par rapport audit premier segment et qui est destiné à être monté en rotation sur une chape de pédalier, le premier segment possédant un appendice saillant s'étendant parallèlement audit premier segment et apte à venir interagir avec un maitre-cylindre.

Un système de freinage selon l'invention présente l'avantage d'être peu encombrant, car l'appendice saillant de la pédale de frein est peu étendu et de faible épaisseur. Il ne contribue donc pas à alourdir le véhicule. Il a de plus l'avantage de permettre l'utilisation de pédales de frein déjà existantes en les adaptant au moyen de l'implantation de l'appendice saillant. Il permet donc de réaliser des économies en ne nécessitant pas systématiquement la fabrication de nouvelles pédales.

On donne, ci-après, une description détaillée d'un mode de réalisation préféré d'un système de freinage selon l'invention, en se référant aux figures 1 à 4.
- La figure 1 est une vue en perspective d'une pédale de frein selon l'invention,
- La figure 2 est une vue en perspective d'un système de freinage selon l'invention,
- La figure 3 est une vue en perspective sous un autre angle du système de freinage de la figure 2,
- La figure 4 est une vue agrandie du système de freinage de la figure 2 montrant l'interaction entre l'appendice saillant et le maitre-cylindre.

La description détaillée est effectuée par rapport à un référentiel lié au véhicule et pour lequel l'axe X est un axe longitudinal du véhicule orienté vers l'avant, l'axe Y est un axe transversal du véhicule orienté vers la gauche et l'axe Z est un axe vertical orienté vers le haut.

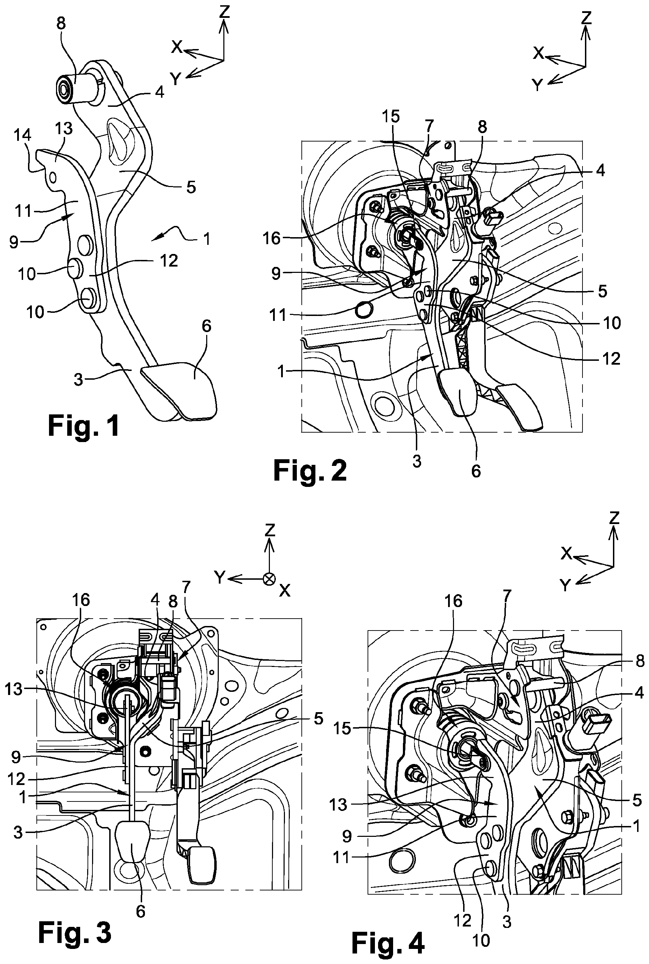

En se référant à la figure 1 une pédale de frein 1 selon l'invention comprend un corps principal allongé, comportant deux segments d'extrémité 3, 4 allongés, et reliés entre eux par un segment de liaison 5. Un premier segment d'extrémité 3 se termine par un patin d'actionnement 6 et un deuxième segment d'extrémité 4 est destiné à venir se fixer de façon articulée à une chape 7 de pédalier, ledit premier segment 3 et ledit deuxième segment 4 étant parallèles et dans le prolongement l'un de l'autre. Le deuxième segment 4 se termine par un axe de rotation 8 destiné à être inséré dans ladite chape 7, afin de permettre le pivotement de la pédale 1. Autrement dit, la longueur totale du corps de la pédale 1 est égale à la somme des longueurs du premier segment 3, du deuxième segment 4 et de la projection du segment de liaison 5 sur l'axe suivant lequel sont alignés ledit premier segment 3 et ledit deuxième segment 4. De cette manière, le premier segment 3 et le deuxième segment 4 se retrouvent décalés l'un par rapport à l'autre, selon un axe transversal Y du véhicule.

En se référant aux figures 1, 2, 3, 4, un appendice saillant 9 sous la forme d'une pièce rapportée, est fixé au premier segment 3 du corps de la pédale 1 au moyen de trois rivets 10. Cet appendice est assimilable à une patte d'actionnement plane et allongée, possédant une faible épaisseur. Cette patte possède une partie principale 11 allongée, dont une extrémité 12 définit une zone d'accroche permettant le passage des trois rivets 10, et dont une autre extrémité 13 se termine par un tronçon incliné, qui est sensiblement perpendiculaire à ladite partie principale 11. Le terme « sensiblement » signifie à plus ou moins 5° près. Ce tronçon 13 est doté d'une encoche 14 destinée à coopérer avec une butée 15 d'un maitre-cylindre 16, comme le montrent les figures 2 et 4. Le corps de la pédale 1 et l'appendice saillant 9 sont réalisés chacun en métal, et préférentiellement dans le même métal.

En se référant à la figure 1, l'appendice saillant 9 est implanté sur le premier segment 3 de manière à s'étendre parallèlement audit premier segment 3, en direction du deuxième segment 4. Autrement dit, le premier segment 3 est prolongé au niveau de l'une de ses extrémités, par le segment de liaison 5 et par l'appendice saillant 9.

En se référant aux figures 2, 3, 4, la pédale de frein 1 est implantée dans le véhicule de sorte que l'axe de rotation 8 du deuxième segment 4 soit inséré dans la chape 7 de pédalier en étant positionné de façon transversale et horizontale dans le véhicule, et de sorte que la butée 15 du maitre-cylindre 16 soit placée dans l'encoche 14 de l'appendice saillant 9.

Une fois la pédale de frein 1 montée dans le véhicule, une pression du pied du conducteur sur le patin d'actionnement 6, entraine une rotation de la pédale de frein 1 autour de son axe de rotation 8. Simultanément, l'appendice saillant 9 exerce une poussée sur le maitre-cylindre 16 grâce à l'interaction entre l'encoche 14 et la butée 15 pour déclencher la phase de freinage du véhicule.

Dans le cas de l'absence inopinée de l'un des trois rivets 10, l'appendice 9 demeure solidement fixé au premier segment 3 par l'intermédiaire de deux rivets 10, empêchant ledit appendice 9 de pivoter sur ledit premier segment 3.

## Revendications

1. Système de freinage d'un véhicule comprenant une chape (7) de pédalier, un maitre-cylindre (16) et une pédale (1) de frein dotée d'un patin d'actionnement (6), la pédale (1) étant montée en rotation sur ladite chape (7) pour lui permettre d'interagir avec ledit maitre-cylindre (16) au moyen d'une pression exercée par le pied sur ledit patin (6) pour assurer le freinage dudit véhicule, **caractérisé en ce que** la pédale (1) présente un premier segment (3) portant le patin d'actionnement (6) et un deuxième segment (4) qui est décalé par rapport audit premier segment (3) et qui est monté en rotation sur ladite chape (7), et **en ce que** le premier segment (3) possède un appendice saillant (9) s'étendant parallèlement au premier segment (3) de manière à créer un segment résultant dont la longueur totale est supérieure à la longueur du premier segment (3) et **en ce que** l'appendice est apte à venir interagir avec le maitre-cylindre (16).

2. Système de freinage selon la revendication 1, **caractérisé en ce que** le premier segment (3) et le deuxième segment (4) sont dans le prolongement l'un de l'autre, et **en ce que** l'appendice saillant (9) s'étend vers le deuxième segment (4).

3. Système de freinage selon l'une quelconque des revendications 1 ou 2, **caractérisé en ce que** le premier segment (3) et le deuxième segment (4) sont parallèles et sont reliés entre eux par un segment de liaison (5), qui est incliné par rapport audit premier segment (3) et audit deuxième segment (4).

4. Système de freinage selon l'une quelconque des revendications 1 à 3, **caractérisé en ce que** l'appendice saillant (9) est plan et de faible épaisseur.

5. Système de freinage selon l'une quelconque des revendications 1 à 4, **caractérisé en ce que** l'appendice saillant (9) est une pièce rapportée qui est solidarisée au premier segment (3).

6. Système de freinage selon la revendication 5, **caractérisé en ce que** l'appendice saillant (9) est fixé au premier segment (3) par l'intermédiaire d'au moins un rivet (10).

7. Système de freinage selon la revendication 6, **caractérisé en ce que** l'appendice saillant (9) est fixé au premier segment (3) par l'intermédiaire de trois rivets (10).

8. Système de freinage selon la revendication 5, **caractérisé en ce que** l'appendice saillant (9) est fixé au premier segment (3) par soudage.

9. Système de freinage selon l'une quelconque des revendications 1 à 8, **caractérisé en ce que** l'appendice saillant (9) est en métal.

10. Pédale (1) de frein pour la réalisation d'un système de freinage selon l'une quelconque des revendications 1 à 9, **caractérisée en ce qu'**elle présente un premier segment (3) portant le patin d'actionnement (6) et un deuxième segment (4) qui est décalé par rapport audit premier segment (3) et qui est destiné à être monté en rotation sur une chape (7) de pédalier, et **en ce que** le premier segment (3) possède un appendice saillant (9) s'étendant parallèlement audit premier segment (3) et apte à venir interagir avec un maitre-cylindre (16).

## Patentansprüche

1. Bremssystem für ein Fahrzeug, umfassend eine Gabel (7) für eine Pedalanordnung, einen Hauptbremszylinder (16) und ein Bremspedal (1), das mit einer Betätigungsplatte (6) ausgestattet ist, wobei das Pedal (1) drehbar an der Gabel (7) gelagert ist, um ihm zu ermöglichen, mittels eines vom Fuß auf die Platte (6) ausgeübten Drucks mit dem Hauptbremszylinder (16) zu interagieren, um das Bremsen des Fahrzeugs zu gewährleisten, **dadurch gekennzeichnet, dass** das Pedal (1) ein erstes Segment (3) aufweist, das die Betätigungsplatte (6) trägt, und ein zweites Segment (4), das in Bezug auf das erste Segment (3) versetzt ist und das drehbar an der Gabel (7) gelagert ist, dass das erste Segment (3) einen abstehenden Ansatz (9) besitzt, der sich parallel zum ersten Segment (3) derart erstreckt, dass ein resultierendes Segment geschaffen wird, dessen Gesamtlänge größer als die Länge des ersten Segments (3) ist, und dass der Ansatz geeignet ist, mit dem Hauptbremszylinder (16) in Interaktion zu gelangen.

2. Bremssystem nach Anspruch 1, **dadurch gekennzeichnet, dass** das erste Segment (3) und das zweite Segment (4) in der Verlängerung voneinander sind und dass der abstehende Ansatz (9) sich zum zweiten Segment (4) hin erstreckt.

3. Bremssystem nach einem der Ansprüche 1 oder 2, **dadurch gekennzeichnet, dass** das erste Segment (3) und das zweite Segment (4) parallel sind und untereinander durch ein Verbindungssegment (5) verbunden sind, das in Bezug auf das erste Segment (3) und das zweite Segment (4) geneigt ist.

4. Bremssystem nach einem der Ansprüche 1 bis 3, **dadurch gekennzeichnet, dass** der abstehende Ansatz (9) eben und von geringer Dicke ist.

5. Bremssystem nach einem der Ansprüche 1 bis 4, **dadurch gekennzeichnet, dass** der abstehende Ansatz (9) ein angesetztes Teil ist, das mit dem ersten Segment (3) fest verbunden ist.

6. Bremssystem nach Anspruch 5, **dadurch gekennzeichnet, dass** der abstehende Absatz (9) am ersten Segment (3) mit mindestens einem Niet (10) befestigt ist.

7. Bremssystem nach Anspruch 6, **dadurch gekennzeichnet, dass** der abstehende Absatz (9) am ersten Segment (3) mit drei Nieten (10) befestigt ist.

8. Bremssystem nach Anspruch 5, **dadurch gekennzeichnet, dass** der abstehende Absatz (9) am ersten Segment (3) durch Schweißen befestigt ist.

9. Bremssystem nach einem der Ansprüche 1 bis 8, **dadurch gekennzeichnet, dass** der abstehende Ansatz (9) aus Metall ist.

10. Bremspedal (1) zur Ausführung eines Bremssystems nach einem der Ansprüche 1 bis 9, **dadurch gekennzeichnet, dass** es ein erstes Segment (3) aufweist, das die Betätigungsplatte (6) trägt, und ein zweites Segment (4), das in Bezug auf das erste Segment (3) versetzt ist und das dazu bestimmt ist, drehbar an einer Gabel (7) einer Pedalanordnung gelagert zu werden, und dass das erste Segment (3) einen abstehenden Ansatz (9) besitzt, der sich parallel zum ersten Segment (3) erstreckt und geeignet ist, mit einem Hauptbremszylinder (16) in Interaktion zu gelangen.

## Claims

1. Braking system of a vehicle, comprising a pedal assembly yoke (7), a master cylinder (16) and a brake pedal (1) fitted with an actuating pad (6), the pedal (1) being mounted in rotation on said yoke (7) to allow it to interact with said master cylinder (16) by means of a pressure exerted by the foot on said pad (6) in order to brake said vehicle, **characterized in that** the pedal (1) has a first segment (3) bearing the actuating pad (6), and a second segment (4) which is offset with respect to said first segment (3) and which is mounted in rotation on said yoke (7), and **in that** the first segment (3) has a projecting appendage (9) extending parallel to the first segment (3) so as to create a resultant segment whose total length is greater than the length of the first segment (3), and **in that** the appendage is able to interact with the master cylinder (16).

2. Braking system according to Claim 1, **characterized in that** the first segment (3) and the second segment (4) are in the continuation of one another, and **in that** the projecting appendage (9) extends towards the second segment (4).

3. Braking system according to either one of Claims 1 and 2, **characterized in that** the first segment (3) and the second segment (4) are parallel and are connected to one another by a connecting segment (5) which is inclined with respect to said first segment (3) and to said second segment (4).

4. Braking system according to any one of Claims 1 to 3, **characterized in that** the projecting appendage (9) is planar and of smaller thickness.

5. Braking system according to any one of Claims 1 to 4, **characterized in that** the projecting appendage (9) is an add-on part which is secured to the first segment (3) .

6. Braking system according to Claim 5, **characterized in that** the projecting appendage (9) is fastened to the first segment (3) by way of at least one rivet (10).

7. Braking system according to Claim 6, **characterized in that** the projecting appendage (9) is fastened to the first segment (3) by way of three rivets (10).

8. Braking system according to Claim 5, **characterized in that** the projecting appendage (9) is fastened to the first segment (3) by welding.

9. Braking system according to any one of Claims 1 to 8, **characterized in that** the projecting appendage (9) is made of metal.

10. Brake pedal (1) for the production of a braking system according to any one of Claims 1 to 9, **characterized in that** it has a first segment (3) bearing the actuating pad (6), and a second segment (4) which is offset with respect to said first segment (3) and which is intended to be mounted in rotation on a pedal assembly yoke (7), and **in that** the first segment (3) has a projecting appendage (9) extending parallel to said first segment (3) and able to interact with a master cylinder (16) .
